(19) Europäisches Patentamt
European Patent Office
Office européen des brevets

(11) EP 1 903 629 A2

(12) EUROPÄISCHE PATENTANMELDUNG

(43) Veröffentlichungstag:
26.03.2008 Patentblatt 2008/13

(51) Int Cl.:
H01M 8/02 (2006.01)

(21) Anmeldenummer: 07017068.3

(22) Anmeldetag: 31.08.2007

(84) Benannte Vertragsstaaten:
AT BE BG CH CY CZ DE DK EE ES FI FR GB GR
HU IE IS IT LI LT LU LV MC MT NL PL PT RO SE
SI SK TR
Benannte Erstreckungsstaaten:
AL BA HR MK YU

(30) Priorität: 01.09.2006 DE 102006041296

(71) Anmelder: Behr GmbH & Co. KG
70469 Stuttgart (DE)

(72) Erfinder:
• Kaiser, Wolfram
70437 Stuttgart (DE)
• Von Stackelberg, Burkhard
70565 Stuttgart (DE)

(54) **Scheibenelement für eine Stromabnehmerplatte oder Bipolarplatte einer Brennstoffzelle**

(57) Die Erfindung betrifft ein Scheibenelement (1) für eine Stromabnehmerplatte oder Bipolarplatte einer Brennstoffzelle (3), mit einer ein- oder beidseitig eingebrachten Kanalstruktur (S) mit mehreren, insbesondere parallel verlaufenden Kanälen (2) mit Strömungsquerschnitten, wobei der jeweilige Kanal (2) eine an den zugehörigen Strömungsquerschnitt angepasste innere Geometrie mit verschiedenen Kennwerten (K1, K2) für verschiedene Kanalabschnitte ((1) bis (5)) aufweist.

Fig. 2

Printed by Jouve, 75001 PARIS (FR)

EP 1 903 629 A2

**Beschreibung**

Die Erfindung betrifft ein Scheibenelement für eine Stromabnehmerplatte oder Bipolarplatte einer Brennstoffzelle. Dabei weist das Scheibenelement eine ein- oder beidseitig eingebrachte Kanalstruktur mit mehreren, insbesondere parallel verlaufenden Kanälen mit Strömungsquerschnitten auf. Die Kanäle dienen dem Transport von Temperier- bzw. Reaktionsmedien. Des Weiteren betrifft die Erfindung ein Scheibenpaket aus mehreren übereinander gestapelten Scheibenelementen. Das Scheibenpaket kann beispielsweise ein Brennstoffzellenstapel bzw. ein Brennstoffzellensystem sein. Darüber hinaus wird ein Verfahren zur Herstellung eines solchen Scheibenelements angegeben.

Die Umwandlung von chemischer in elektrische Energie mittels einer Brennstoffzelle stellt eine effiziente und umweltfreundliche Methode zur Gewinnung von elektrischem Strom aus den Betriebsmedien Wasserstoff und Sauerstoff dar. Dabei finden üblicherweise zwei räumlich getrennte Elektrodenreaktionen statt, bei denen Elektronen freigesetzt bzw. gebunden werden. Ein Beispiel für zwei korrespondierende Elektrodenreaktionen in einer gattungsgemäßen Vorrichtung, z. B. in einer Polymerelektrolytbrennstoffzelle (kurz PEMFC genannt) sind folgende Reaktionen:

$$H_2 => 2H^+ + 2e^- \qquad \text{(Anodische Reaktion)}$$

$$2H^+ + 2e^- + \tfrac{1}{2} O_2 => H_2O \qquad \text{(Kathodische Reaktion)}$$

Bei anderer Bauart, z. B. einer Festoxid-Brennstoffzelle (kurz SOFC genannt) können beispielsweise folgende Reaktionen beobachtet werden:

$$H_2 + O^{2-} => H_2O + 2e^- \qquad \text{(Anodische Reaktion I)}$$

$$CO + O^{2-} => CO_{2+} 2e^- \qquad \text{(Anodische Reaktion II)}$$

$$O_2 + 4e^- => 2O^{2-} \text{ (Kathodische Reaktion)}$$

Andere Brennstoffzellen weisen zum Teil andere Reaktionen auf. Gemeinsam ist jeweils der Transport einer Spezies in elektrisch nicht-neutraler Form durch einen Elektrolyten und den parallel hierzu verlaufenden Transport von Elektronen durch einen äußeren Leiter, um die Spezies nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Reaktionseinheiten, z. B. Brennstoffzellen, aufeinander gestapelt und ein solcher Stapel, z.B. ein Brennstoffzellenstapel, als Stromquelle verwendet. Eine einzelne Reaktionseinheit, z. B. eine Brennstoffzelle, besteht dabei aus einer Elektrolyteinheit, wie Membran, welche die Reaktanden, insbesondere Wasserstoff und Sauerstoff bei einer Polymerelektrolyt-Membran-Brennstoffzelle (PEMFC), beziehungsweise Wasserstoff/Kohlenmonoxid und Sauerstoff bei einer Festoxid-Brennstoffzelle (SOFC), voneinander trennt und eine Ionenleitfähigkeit, insbesondere eine $H^+$-Protonenleitfähigkeit bei einer PEMFC oder eine $O^{2-}$-Leitfähigkeit, aufweist, sowie aus zwei mit Katalysatormaterial belegten Elektroden, die unter anderem zum Abgriff des von der Reaktionseinheit, der Brennstoffzelle, erzeugten elektrischen Stroms erforderlich sind.

Die Reaktanden, beispielsweise Wasserstoff und Sauerstoff, und das Reaktionsprodukt Wasser sowie gegebenenfalls ein Medium, das zur Abführung von überschüssiger Reaktionswärme dient, strömen durch Kanäle (Strömungs- oder Fluidkanäle) von Platten oder Scheibenelementen, wobei die Reaktanden nicht notwendigerweise in reiner Form vorliegen müssen. Beispielsweise kann bei einer Bipolarplatte als Scheibenelement das Fluid auf der Kathodenseite Luft sein, deren Sauerstoff an der Reaktion teilnimmt. Auf der Anodenseite wird über die Kanäle der Brennstoff, z. B. Wasserstoff, verteilt. Insbesondere bei Verwendung eines wärmeabführenden Mediums wird durch eine thermische Verbindung der jeweiligen Fluidkanäle durch Kontaktierung der Scheibenelemente oder durch deren Wandung für einen ausreichenden Wärmeübertrag zwischen den jeweiligen Fluiden gesorgt.

Reaktanden und Reaktionsprodukte werden im Rahmen der vorliegenden Erfindung als Reaktionsmedien bezeichnet. Als Temperiermedium wird ein Medium bezeichnet, das geeignet ist, einer Komponente beziehungsweise einer Reaktionszone Wärme zu- oder abzuführen.

Der Wirkungsgrad für die Umwandlung von chemischer in elektrische Energie und somit die spezifische Leistung der Brennstoffzellen hängt unter anderem maßgeblich von dem Aufbau der Kanalstruktur der kontaktierenden Scheibenelementen einer Brennstoffzelle, insbesondere von der Kanalstruktur der Bipolarplatten und deren Kontaktierung zur Membran-Elektroden-Anordnung.

Der Aufbau einer herkömmlichen Polymerelektrolyt-Membran-Brennstoffzelle (PEMFC) ist aus der DE 197 13 250 A1 bekannt. Eine herkömmliche PEM-Brennstoffzelle weist eine Polymerelektrolyt-Membran und Elektrodenschichten und an die Elektrodenschichten angrenzende Trenn- oder Scheibenplatten mit Kanälen und Kühlräumen auf. Dabei ist zwischen zwei Elektrodenschichten eine Polymerelektrolyt-Membran angeordnet. Die Scheibenplatten oder --elemente sind insbesondere Stromabnehmer- oder Bipolarplatten. Es hat sich gezeigt, dass aufgrund von Kanalverengungen durch Umlenkungen oder Krümmungen der Scheibenelemente in den Kanälen eine weitgehend homogene laminare Strömung in eine turbulente Strömung umschlug, die zu hohen Druckverlusten führt. Darüber hinaus kann es aufgrund von scharfen oder runden Stegkanten der Kanäle zu einer Beschädigung einer zwischen zwei Scheibenelementen angeordneten Membran-Elektroden-Anordnung bzw. zu einer Verengung des Strömungsquerschnitts der Kanäle der Scheibenelemente kommen

Der Erfindung liegt daher die Aufgabe zugrunde, ein verbessertes Scheibenelement für eine Stromabnehmerplatte oder Bipolarplatte einer Brennstoffzelle anzugeben. Darüber hinaus ist ein einfach aufgebauter und effizienter Brennstoffzellenstapel anzugeben. Ferner ist ein einfaches Herstellungsverfahren für ein solches Scheibenelement anzugeben.

Die Aufgabe wird erfindungsgemäß gelöst durch ein Scheibenelement mit den Merkmalen des Anspruchs 1. Hinsichtlich des Brennstoffzellenstapels wird die Aufgabe erfindungsgemäß gelöst durch die Merkmale des Anspruchs 16. Hinsichtlich des Verfahrens wird die Aufgabe erfindungsgemäß gelöst durch die Merkmale des Anspruchs 17. Vorteilhafte Weiterbildungen der Erfindung sind Gegenstand der Unteransprüche.

Das erfindungsgemäße Scheibenelement für eine Stromabnehmerplatte oder Bipolarplatte weist eine ein- oder beidseitig eingebrachte Kanalstruktur mit mehreren, insbesondere parallel verlaufenden Kanälen mit Strömungsquerschnitten auf, wobei der jeweilige Kanal eine an den zugehörigen Strömungsquerschnitt angepasste innere Geometrie mit verschiedenen Kennwerten für verschiedene Kanalabschnitte aufweist. Dabei verlaufen die Kanäle beispielsweise mäanderförmig. D.h. die Kanäle verlaufen im Wesentlichen parallel zueinander und weisen weitgehend gerade Kanalabschnitte und an Umlenkungspunkten gekrümmte Kanalabschnitte auf. Das Scheibenelement ist insbesondere ein Metallblech, in welches durch Umformen die Kanalstrukturen eingebracht sind. Bei den Kanälen handelt es sich um noch oben hin offene Kanäle, die in Form von Vertiefungen in das Metallblech eingebracht sind. Durch die die verschiedenen Kanalabschnitte zugehörigen Kennwerte kann der jeweilige Kanal entlang seines Verlaufs und unabhängig von seinem Verlauf und seiner Form eine weitgehend gleich bleibende thermische und mechanische Stabilität sowie eine hinreichend gute Strömungseigenschaft aufweisen.

In einer möglichen Ausführungsform ist für einen gerade verlaufenden Kanalabschnitt ein erster Kennwert vorgebbar, der das Verhältnis von Abrundung des Kanalquerschnitts zur Breite des Kanalquerschnitts repräsentiert. Dabei sind als Abrundung des Kanalquerschnitts ein Rundungsradius am Übergang vom Kanalsteg zur Kanalseitenwand und/oder ein Rundungsradius am Übergang von der Kanalseitenwand zum Kanalboden vorgebbar. Unter einem Kanalsteg wird dabei die Verbindung zwischen zwei Kanalseitenwänden benachbarter Kanäle verstanden, die als Kontaktfläche zu einem anderen Scheibenelement, beispielsweise eine Membran-Elektroden-Anordnung (auch Gasdiffusionselektrode genannt) dient. Unter dem Kanalboden wird die Verbindung von zwei Kanalseitenwänden eines Kanals verstanden, der nach oben hin offen ist und durch Aufstapeln beispielsweise einer Membran-Elektroden-Anordnung verschließbar ist. Der Übergang vom Kanalsteg zur Kanalseitenwand (kurz auch "Kante" am Übergang vom Steg zum Kanal genannt) ist dabei von besonderer Bedeutung. Ist die Kante zu "scharf", kann es, insbesondere bei Kanal-auf-Steg-Verhältnissen, zu einer Beschädigung der Membran-Elektroden-Anordnung kommen. Ist die Kante hingegen zu "rund", drückt die Membran-Elektroden-Anordnung in den Kanal hinein und reduziert den Strömungsquerschnitt und führt zu einer Kanalverengung und somit zu einer erheblichen Reduzierung des Systemwirkungsgrades. Durch Vorgabe eines ersten Kennwerts für das Verhältnis von Kanalabrundung zur Kanalbreite ist ein optimiertes und mechanisch stabiles Scheibenelement mit ausreichend guten Strömungseigenschaften und ausreichender elektrischer Leitfähigkeit ermöglicht.

In einer bevorzugten Ausführungsform ist für den erste Kennwert folgende Beziehung vorgebbar:

$$K1 = \left[ \frac{-[2 \cdot R1 \cdot \alpha \cdot \sin(\alpha)] + R1 \cdot \pi \cdot \sin(\alpha) - 2 \cdot R1 \cdot \sin(\alpha) - 2 \cdot R1 \cdot \cos(\alpha)}{KB \cdot \sin(\alpha) + SB \cdot \sin(\alpha) + 2 \cdot Z \cdot \sin(\alpha)} \right] +$$
$$\left[ \frac{2 \cdot R1 - 2 \cdot R2 \cdot \alpha \cdot \sin(\alpha) + R2 \cdot \pi \cdot \sin(\alpha) - 2 \cdot R2 \cdot \sin(\alpha) - 2 \cdot R2 \cdot \cos(\alpha) + 2 \cdot R2 - 2 \cdot Z \cdot \sin(\alpha) + 2 \cdot Z}{KB \cdot \sin(\alpha) + SB \cdot \sin(\alpha) + 2 \cdot Z \cdot \sin(\alpha).} \right]$$

[1]

mit R1 = Rundungsradius am Übergang vom Kanalsteg zur Kanalseitenwand, R2 = Rundungsradius am Übergang von Kanalseitenwand zum Kanalboden, SB = Stegbreite, KB = Kanalbreite, Z = Ziehspalt, $\alpha$ = Flankenwinkel.

**(Frage an den Erfinder: In der Erfindungsmeldung ist der Parameter H = Kanalhöhe genannt, der aber in der Beziehung nicht aufgeführt ist. Ist die Beziehung richtig wiedergegeben?)**

Vorzugsweise beträgt der erste Kennwert höchstens 0,8, bevorzugt 0,3 oder 0,15. Bei Überschreiten des ersten Kennwerts ist ein Kanal gegeben, bei dem in herkömmlicher Weise durch Hineindrücken der Membran-Elektroden-Anordnung die Kanaltiefe reduziert wird und somit die Strömungsgeschwindigkeiten beeinflusst werden. Ein besonders stabiler Kanal mit guten Strömungseigenschaften ist bei einem ersten Kennwert von 0,3 bzw. 0,15 gegeben.

Alternativ oder zusätzlich kann für einen gekrümmten Kanalabschnitt ein zweiter Kennwert vorgegeben sein, der eine Innenkrümmung und/oder eine Außenkrümmung des Kanals repräsentiert. Herkömmliche Kanäle von Bipolarplatten sind 90° umgelenkt. Eine solche herkömmliche 90° Umlenkung ohne Ausrundung der Krümmung führt zu einer Einengung der Strömung mit dem Effekt, dass die Strömung beschleunigt wird, die zu hohen Druckverlusten führt. Zweckmäßigerweise repräsentiert die Innenkrümmung den Innenradius des gekrümmten Kanalabschnitts entlang des Kanalstegs. Die Außenkrümmung repräsentiert den Außenradius des gekrümmten Kanalabschnitts entlang des Kanalstegs. Durch eine vorgegebene Innen- und Außenkrümmung des gekrümmten Kanalabschnitts mittels des zweiten Kanalwerts und somit durch eine Abrundung des Kanalverlaufs anstelle einer 90°-Umlenkung wird die Strömung sanfter um die "Ecke" oder entlang der Abrundung geführt. Die durch die Krümmung bedingte Einschnürung der Strömung wird hierdurch reduziert, so dass Druckverluste verringert werden.

Vorzugsweise ist die Stegbreite im gekrümmten Kanalabschnitt konstant. Dabei entspricht die Stegbreite im gekrümmten Kanalabschnitt im Wesentlichen der Stegbreite im gerade verlaufenden Kanalabschnitt. Zweckmäßigerweise sind die Außenkrümmung und die Innenkrümmung entlang des gekrümmten Kanalabschnitts im Wesentlichen gleichgroß gemäß der Beziehung:

$$R = \frac{(D_A - D_I)}{2} \qquad\qquad [2]$$

mit R = Radius, $D_A$ = Gesamtstegbreite eines ungekrümmten Kanalabschnitts in einer mittleren Kanalhöhe, $D_I$ = Breite der Auflagefläche des Kanalstegs nach Abzug der innen und außen verlaufenden Oberkantenradien in diesem Kanalabschnitt.

Alternativ können die Außenkrümmung und die Innenkrümmung entlang des gekrümmten Kanalabschnitts variieren gemäß der Beziehung:

$$R_{A/I} = \frac{(D_A - D_I)}{2} + / - b \qquad\qquad [3]$$

mit $R_A$ = Außenradius, $R_I$ = Innenradius, b = positionsabhängiger Parameter (Konstante).

Zweckmäßigerweise weist das Scheibenelement eine Scheibendicke von 0,05 mm bis 1 mm. Ein derartig dünnes Metallblech erlaubt eine einfache Umformung und einen hinreichend guten Wärmeübergang sowie eine hinreichend gute Stabilität. Auch sind durch ein derart dünnes Scheibenelement ein geringes Gewicht und ein niedriger Aufbau eines Brennstoffzellenstapels ermöglicht. Darüber hinaus ist das Scheibenelement aus einem metallischen Werkstoff, z. B. Titan, oder Graphit, mit einer elektrischen Leitfähigkeit von mindestens 5000 S/cm gebildet. Zusätzlich ist eine gute Wärmeleitfähigkeit gegeben. Ferner ist Scheibenelement aus einem metallischen Werkstoff mit einer mechanischen Festigkeit von mindestens 100 MPa gebildet.

Beim Herstellungsverfahren werden erfindungsgemäß in das Scheibenelement ein- oder beidseitig durch Umformen Kanalstrukturen eingebracht, wobei der Umformgrad der einzubringenden Kanäle beim Umformen schrittweise reduziert wird, indem der Umformgrad entlang des Kanalsverlauf für verschiedene Kanalabschnitte mittels eines vorgegebenen Kennwerts verschieden reduziert wird. Dabei ist ein erster Kennwert für einen geraden Kanalabschnitt vorgebbar, der das Verhältnis von Abrundung des Kanalquerschnitts zur Breite des Kanalquerschnitts repräsentiert. Als ein zweiter Kennwert kann alternativ oder zusätzlich eine Innenkrümmung und/oder eine Außenkrümmung des Kanals vorgegeben werden.

Ausführungsbeispiele der Erfindung werden anhand einer Zeichnung näher erläutert. Darin zeigen:

Fig. 1    schematisch eine Draufsicht auf eine Brennstoffzelle, umfassend mindestens ein Scheibenelement mit eingebrachter Kanalstruktur, deren Kanäle mäanderförmig verlaufen,

Fig. 2 .schematisch einen Querschnitt durch eine Brennstoffzelle mit zwei Scheibenelementen und eine dazwischen angeordnete Membran-Elektroden-Anordnung,

Fig. 3 schematisch einen Querschnitt durch eine Brennstoffzelle mit zwei Scheibenelementen und ein dazwischen angeordnete Membran-Elektroden-Anordnung, welche in die Kanalstruktur der Scheibenelemente hineingedrückt ist,

Fig. 4 schematisch einen Querschnitt durch ein Scheibenelement mit einer beidseitig eingebrachten Kanalstruktur,

Fig. 5 schematisch verschiedene Ausführungsformen für einen Stegansatz eines Kanals der Kanalstruktur,

Fig. 6 schematisch weitere verschiedene Ausführungsformen für einen Stegansatz eines Kanals der Kanalstruktur,

Fig. 7 schematisch verschiedene Ausführungsformen für einen Kanal im gekrümmten Kanalabschnitt,

Fig. 8 und 9 schematisch im Detail eine mögliche Ausführungsform für den Krümmungsverlaufs eines Kanals im gekrümmten Kanalabschnitt.

Einander entsprechende Teile sind in allen Figuren mit den gleichen Bezugszeichen versehen.

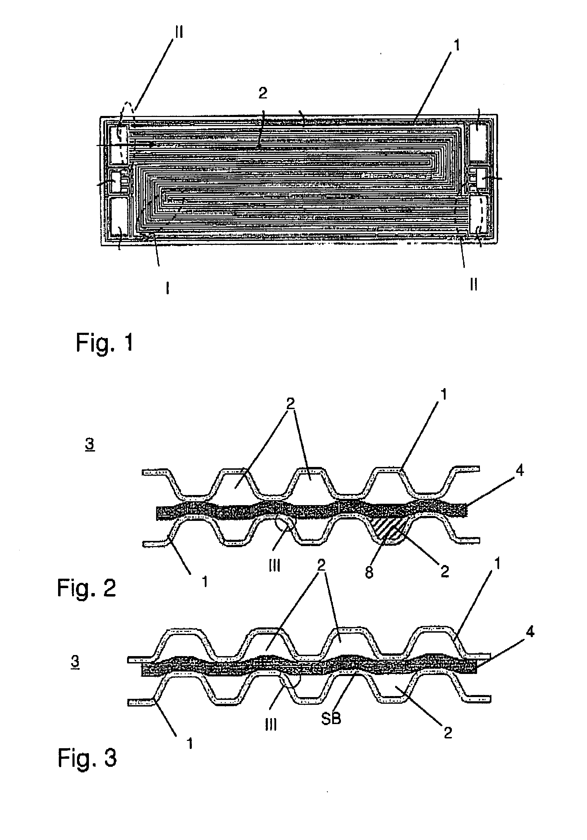

Figur 1 zeigt schematisch eine Draufsicht auf ein Scheibenelement 1, in welches eine Kanalstruktur K eingebracht ist. Das Scheibenelement 1 ist beispielsweise eine Bipolarplatte oder eine Stromabnehmerplatte für eine einzelne Brennstoffzelle gemäß Figur 2. Die Kanalstruktur K umfasst mehrere parallel zueinander verlaufende Kanäle 2, die im Kreisbereich I am Scheibenende umgelenkt sind, so dass sich ein mäanderförmiger Verlauf der Kanäle 2 ergibt. In Kreisbereichen II, z. B. einem Ein- oder Ausströmbereich, weisen die Kanäle 2 jeweils einen Stegansatz zum Ein- oder Ausströmen von Reaktionsmedien und/oder Temperiermedium, Um das aus der Kanalstruktur K gebildete Strömungsfeld ganzflächig mit Reaktionsmedien zu versorgen, sind die Kanäle 2 in Art von Kanalbündeln parallel zueinander angeordnet, die ausgehend von einem Port (= Kreisbereich II, ein Ein- oder Ausströmbereich) das Strömungsfeld mittels Umlenkungen (Kreisbereich I) ausfüllen. Das Scheibenelement 1 ist ein Formteil, in das entsprechende Vertiefungen oder Sicken eingepresst oder in anderer Art eingebracht sind. Das Scheibenelement 1 kann aus einem dünnen Metallblech oder einem Blech aus einer Metalllegierung gebildet sein. Zur Bildung einer Brennstoffzelle sind mehrere Scheibenelemente 1 übereinander gestapelt. Dabei sind die Scheibenelemente 1 umlaufend dicht miteinander verbunden, insbesondere durch Schweißen, Löten und/oder mechanisches Umformen. Dabei sind auf das Scheibenelement 1 weitere Scheibenelemente 1 oder Membranen oder Elektrolyteinheiten ober- und/oder unterseitig zur Bildung eines zur Bildung eines Brennstoffzellenstapels aufstapelbar.

Figur 2 zeigt schematisch einen Querschnitt durch eine Brennstoffzelle 3 mit zwei Scheibenelementen 1 und eine dazwischen angeordnete Membran-Elektroden-Anordnung 4. Die Scheibenelemente 1 sind mit zugehörigen Kanalstrukturen K versehen, die als Vertiefungen, insbesondere Sicken entlang ihrer Ausdehnung rinnenartig und im Querschnitt mäanderförmig eingebracht sind. Dabei bilden die Kanalstrukturen K beidseitig des jeweiligen Scheibenelements 1 Kanäle 2, die beispielsweise anodenseitige- und kathodenseitige Fluidkanäle einer Bipolarplatte für die Brennstoffzelle 3 bilden. Die Kanäle 2 dienen der Versorgung der zwischen den Scheibenelementen 1 angeordneten Membran-Elektroden-Anordnung 4 mit Reaktionsmedien. Alternativ kann das Scheibenelement 1 eine Trennplatte sein, deren Kanäle 2 dem Transport eines Kühl- oder Temperierfluids dienen.

Vorzugsweise weist der jeweilige Kanal 2 einen im Wesentlichen viereckigen, insbesondere einen rechteckigen oder trapezförmigen Kanalquerschnitt auf. Der jeweilige Kanal 2 ist dabei ein nach oben hin offener Kanal, der seitlich durch Kanalseitenwände 5 und nach unten durch einen Kanalboden 6, der die beiden Kanalseitenwände 5 eines einzelnen Kanals 2 verbindet, begrenzt wird. Die Verbindung von Kanalseitenwänden 5 zweier benachbarter Kanäle 2 ist ein Kanalsteg 7. Der Kanalsteg 7 dient als Kontaktfläche zu einem anderen Scheibenelement 1 oder zu der Membran-Elektroden-Anordnung 4. Die nach oben hin offenen Kanäle 2 sind durch Aufstapeln der Membran-Elektroden-Anordnung 4 verschließbar, wobei der Übergang vom Kanalsteg 7 zur Kanalseitenwand 5 (kurz auch "Kante" am Übergang vom Steg zum Kanal genannt) Kreisbereich III von besonderer Bedeutung ist. Vorzugsweise verläuft diese Kante in einem Radius oder einer Fase. Da die geometrischen Verhältnisse an dieser Kante erheblichen Einfluss auf die Leistungsfähigkeit der Brennstoffzelle 3 nehmen, weist erfindungsgemäß der jeweilige Kanal 2 eine an den zugehörigen Strömungsquerschnitt angepasste innere Geometrie mit verschiedenen Kennwerten K für verschiedene Kanalabschnitte, z. B. gerade verlaufenden oder gekrümmten Kanalabschnitte, auf. Der in Strichlinien markierte Bereich 8 repräsentiert die durchströmte Querschnittsfläche eines einzelnen Kanals 2.

In der Praxis kommt es beim Betrieb der Brennstoffzelle 3 aufgrund von lokalen oder globalen Krafteinwirkungen, beispielsweise zu Druckdifferenzen zwischen den Reaktionsmedien oder Reaktanden, und zu einer Verformung der Membran-Elektroden-Anordnung 4. Ein solcher Zustand einer in den Kanal 2 eingedrückten Membran-Elektroden-Anordnung 4 ist in Figur 3 näher dargestellt.

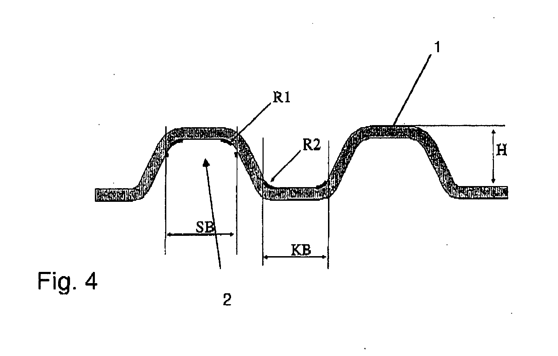

Infolge dieser Verformung kann es an dem Übergang vom Kanalsteg 7 zur Kanalseitenwand 5 (der "Kante") im Kreisbereich III zu einer mechanischen Beanspruchung der Membran-Elektroden-Anordnung 4 bzw. zu einer Beeinflussung der Strömungsverhältnisse im Kanal 2 kommen. Ist die Kante oder der Übergang vom Kanalsteg 7 zur Kanalseitenwand 5 zu "scharf", kann es zu einer Beschädigung der Membran-Elektroden-Anordnung 4 kommen; ist der Übergang hingegen zu "rund", drückt die Membran-Elektroden-Anordnung 4 tief in die betreffenden Kanäle 2 eines Strömungsfeldes ein und reduziert den Strömungsquerschnitt. Dies kann zu einer erheblichen Reduzierung des Systemwirkungsgrades führen. Das Ausmaß der "Versperrung" hängt dabei von den mechanischen Eigenschaften der Membran-Elektroden-Anordnung 4, den einwirkenden äußeren Kräften sowie der inneren Geometrie des Kanals 2, insbesondere vom Rundungsradius R der Kante und der mittleren Kanalbreite KB bzw. Stegbreite SB ab, wie in Figur 4 näher dargestellt ist. Dabei zeigt die Figur 4 schematisch einen Querschnitt durch ein Scheibenelement 1 mit einer beidseitig eingebrachten Kanalstruktur S.

Für einen die Beanspruchung des Kanal 2 und der Membran-Elektroden-Anordnung 4 berücksichtigenden Aufbau des Kanals 2 ist dieser entlang seines Verlauf auf dem Scheibenelement 1 in verschiedene Kanalabschnitte unterteilt, die anhand mindestens eines Kennwertes K strukturiert und geformt werden. So ist beispielsweise ein gerade verlaufender Kanalabschnitt anhand eines ersten Kennwerts K1 formbar, der das Verhältnis von Abrundung des Kanalquerschnitts zur Breite des Kanalquerschnitts repräsentiert. Im Detail wird dabei als Abrundung des Kanalquerschnitts ein Rundungsradius R1 am Übergang vom Kanalsteg 7 zur Kanalseitenwand 5 und/oder ein Rundungsradius R2 am Übergang von der Kanalseitenwand 5 zum Kanalboden 6 vorgegeben. Darüber hinaus wird als Breite des Kanalquerschnitts eine mittlere Stegbreite SB und/oder eine mittlere Kanalbreite KB vorgegeben. Für den ersten Kennwert K1 gilt:

$$K1 = \left[ \frac{-[2 \cdot R1 \cdot \alpha \cdot \sin(\alpha)] + R1 \cdot \pi \cdot \sin(\alpha) - 2 \cdot R1 \cdot \sin(\alpha) - 2 \cdot R1 \cdot \cos(\alpha)}{KB \cdot \sin(\alpha) + SB \cdot \sin(\alpha) + 2 \cdot Z \cdot \sin(\alpha)} \right] +$$

$$\left[ \frac{2 \cdot R1 - 2 \cdot R2 \cdot \alpha \cdot \sin(\alpha) + R2 \cdot \pi \cdot \sin(\alpha) - 2 \cdot R2 \cdot \sin(\alpha) - 2 \cdot R2 \cdot \cos(\alpha) + 2 \cdot R2 - 2 \cdot Z \cdot \sin(\alpha) + 2 \cdot Z}{KB \cdot \sin(\alpha) + SB \cdot \sin(\alpha) + 2 \cdot Z \cdot \sin(\alpha).} \right]$$

mit R1 = Rundungsradius am Übergang vom Kanalsteg zur Kanalseitenwand, R2 = Rundungsradius am Übergang von Kanalseitenwand zum Kanalboden, SB = Stegbreite, KB = Kanalbreite, Z = Ziehspalt des Umformwerkzeugs, $\alpha$ = Flankenwinkel (in RAD).

Vorzugsweise beträgt der erste Kennwert K1 zur Einstellung des Umformgrades zur Kanalbildung höchstens 0,8, bevorzugt 0,3 oder 0,15.

Der erste Kennwert K1 kann weitere Randbedingungen berücksichtigen, wie beispielsweise einen durch die Brennstoffzelle 3 fließenden elektrischen Strom, der an Stegstirnflächen in die Bipolarplatte oder das Scheibenelement 1 eintritt und im Folgenden durch das widerstandsbehaftete Blech des Scheibenelements 1 geleitet wird.

Für die dem ersten Kennwert K1 zugrunde liegenden Beziehung [1] können folgende Wertebereiche für die zu berücksichtigenden Parameter für ein Ausführungsbeispiel ein als Bipolarplatte einer Brennstoffzelle 3 ausgebildetes Scheibenelement 1 vorgegeben werden:

$0 \leq R1 \leq 1$ [mm]

$0 \leq R2 \leq 1$ [mm]

$0.15 * \Pi \leq \alpha \leq 0.4 * \Pi$

$0 \leq Z \leq 1$ [mm]

$0.5 \leq SB \leq 5$ [mm]

$0.5 \leq KB \leq 5$ [mm]

$0 \leq H \leq 5$ [mm].

Zweckmäßigerweise weist das Scheibenelement 1 eine Blechdicke von 0.05 mm bis 1 mm auf. Darüber hinaus gilt der erste Kennwert K1 (auch Strömungsfeldfaktor genannt) für eine umgeformte Bipolarplatte, die aus einem Werkstoff mit einer elektrischen Leitfähigkeit des Blechwerkstoffes im Bereich von > 5000 S/cm und einer mechanischen Festigkeit des Blechwerkstoffes bezogen auf die Grenze des elastischen Bereichs RP0.2 von > 100 MPa.

Hinsichtlich der Herstellung eines als Bipolarplatte ausgebildeten Scheibenelements 1 aus geformten Halbschalen kann mittels eines vorgegebenen zweiten Kennwerts K2 ein möglichst hoher Umformgrad bzw. eine möglichst hohe Kanalhöhe bezogen auf die eingesetzte Blechstärke realisiert werden. Dabei sind Umformungen an gekrümmten Kanalabschnitten (auch Umlenkungen genannt, siehe Kreisbereich I in Figur 1) bzw. an Stegansätze im Ein- oder Ausströmbereich (siehe Kreisbereich II in Figur 1) besonders problematisch, da hier ein höherer Umformgrad als im gerade verlaufenden Kanalbündel vorliegt. Um ein möglichst hohes Umformverhältnis zu erzielen, wobei gleichzeitig das Verhältnis zwischen Umformgrad der Umlenkung bzw. des Stegansatzes und dem Umformgrad eines gerade verlaufenden Stegs im Kanalbündel möglichst ähnlich sein sollte, wird der herkömmliche kantige und rechteckige Stegansatz modifziert. Hierzu wird der zweite Kennwert K2 für einen gekrümmten Kanalabschnitt vorgegeben. Dabei repräsentiert der zweite Kennwert K2 eine Funktion für den Verlauf der Innenkrümmung und/oder der Außenkrümmung des Kanals 2 im gekrümmten Kanalabschnitt.

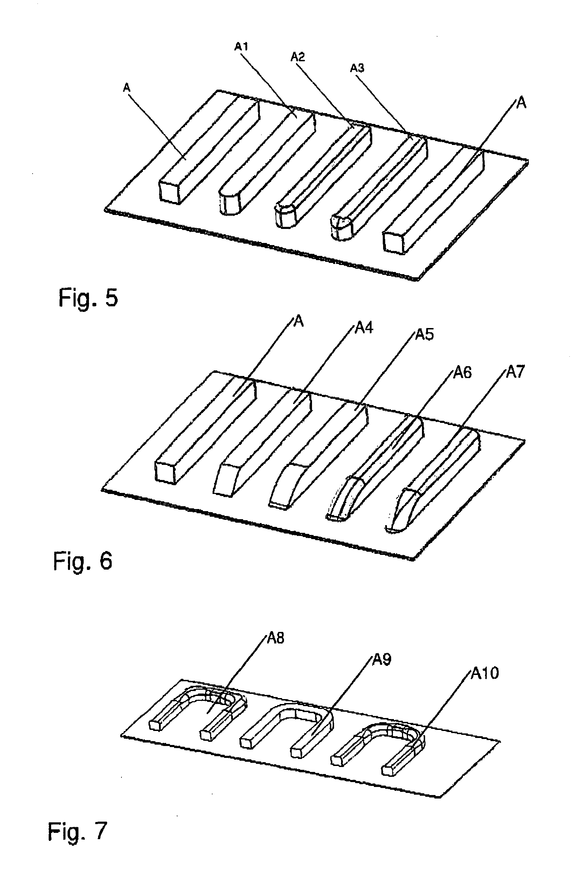

Figur 5 zeigt schematisch verschiedene Ausführungsformen A, A1 bis A3 für einen herkömmlichen bzw. modifizierten Stegansatz eines Kanals 2 im Einström- oder Ausströmbereich (siehe Figur 1, Kreisbereich II) der Kanalstruktur S. Die Ausführungsform A zeigt dabei einen herkömmlichen Stegansatz. Die Ausführungsformen A1 bis A3 zeigen Stegansätze, welche anhand des zweiten Kennwertes K2 entsprechend geformt sind, insbesondere an der Kante zwischen Kanalsteg 7 und Kanalseitenwand 5 angefast bzw. abgerundet sind. Der Stegansatz der Ausführungsform A1 ist vorne beispielsweise abgerundet und bei den Ausführungsformen A2 und A3 sind jeweils die seitlichen und vorderen Oberkanten des Kanals 2 mit einem Rundungsradius R versehen. Zur Reduzierung des maximalen Umformgrades am Ansatzstück wird mittels des zweiten Kennwerts K2 in der Ausführungsform A3 an der Ansatzkante ein größerer Oberkantenradius berücksichtigt.

Darüber hinaus kann der Umformgrad am Stegansatz weiter reduziert werden. Figur 6 zeigt verschiedene Ausführungsformen A4 bis A7, die die bei der Herstellung durchzuführenden Umformungsschritte für einen modifizierten Stegansatz des Kanals 2 zeigen (von links nach rechts).

Je nach Vorgabe des zweiten Kennwerts K2 sind Modifikationen an den Kanten am Übergang vom Kanalsteg 7 zur Kanalseitenwand 5 (auch Oberkante genannt) und/oder am Stegansatz vorgesehen. Alternativ oder zusätzlich können auch Modifikationen an den Unterkanten am Übergang von Kanalseitenwand 5 zum Kanalboden 6 vorgenommen werden.

Im Detail wird der Umformgrad des schrittweise zu modifizierenden Kanals 2 wird durch Kombination einer Fase mit einem Rundungsradius R und einem konstanten oder im Ansatzbereich zunehmenden Oberkantenradius kombiniert, was zu einem sanften Anstieg des Umformgrades vom Stegansatzbeginn bis zur vollen Steghöhe führt.

Analog zur Reduzierung des Umformgrades am Stegansatz oder an den Oberkanten des gerade verlaufenden Kanals 2 ist auch die Reduzierung des Umformgrades bei Umlenkungen in gekrümmten Kanalabschnitten von Bedeutung. Figur 7 zeigt schematisch verschiedene Ausführungsformen A8 bis A10 für gekrümmte Kanalabschnitte. Die Ausführungsformen A8 bis A10 zeigen Umlenkungen, die mit einem Rundungsradius R senkrecht zur Ebenensenkrechten und mit einem Oberkantenradius versehen sind. Durch Kombination der Umlenkradien oder Rundungsradien R an der Innen- und Außenseite des Kanalsteges 7 mit einer Variation der Oberkantenradien an der Innen- und Außenseite des Kanals 2 kann - gegebenenfalls in Verbindung mit einer Reduzierung der Kanalhöhe im Umlenkbereich - eine weitere Verminderung der Zunahme des Umformgrades im Bereich der Umlenkung im Vergleich zum Umformgrad in "geraden" Abschnitten erreicht werden.

In einer besonders bevorzugten Ausführung werden die Oberkantenradien an Innen- und Außenseite des Steges im Bereich der Umlenkung, gegebenenfalls unabhängig voneinander, so variiert und die Rundungsradien R an Innen- und Aussenseite so gewählt, dass:

- die Kanalbreite KB rechts und links vom Kanalsteg 7 im Wesentlichen konstant ist;
- die Breite der Auflagefläche für die Membran-Elektroden-Anordnung 4 auf dem Kanalsteg 7 und somit die mittlere Stegbreite SB im Wesentlichen konstant ist und/oder
- die Umformgradzunahme im Bereich der Umlenkung unter Berücksichtigung der oben genannten Randbedingungen minimal ist.

Dadurch kann die Blechstärke des Scheibenelements 1 bezogen auf die Kanalhöhe optimiert und Herstellkosten, Gewicht und Materialkosten eingespart werden.

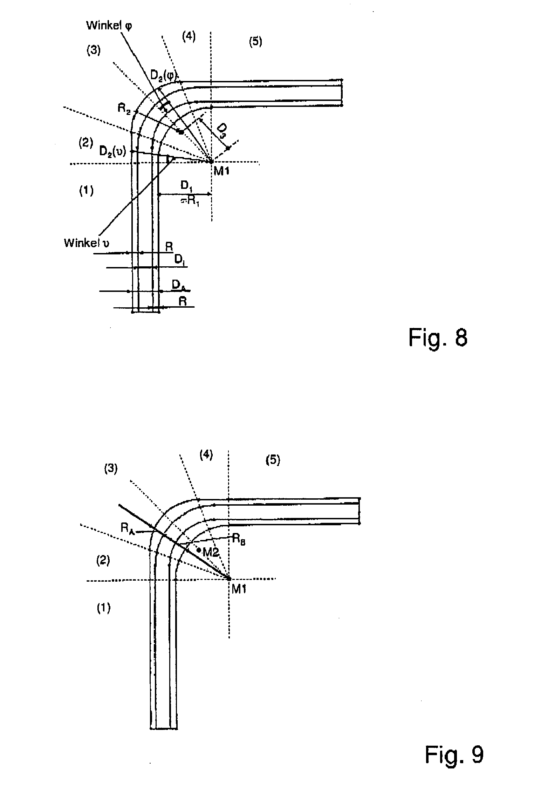

In den Figuren 8 und 9 sind schematisch im Detail mögliche Ausführungsformen für den Krümmungsvedaufs eines Kanals 2 im gekrümmten Kanalabschnitt und dessen Modifikation anhand des zweiten Kennwerts K2 dargestellt.

In einer möglichen Ausführung nimmt der Oberkantenradius an Innen- bzw. Außenseite des Kanalsteges 7, ausgehend vom Oberkantenradius im Bereich des Kanalsteges 7 im geradeaus verlaufenden Kanalabschnitt, im gekrümmten Kanalabschnitt und somit Bereich der Umlenkung des Kanals 2 entsprechend der Umformungsschritte anhand des zweiten Kennwerts K2 so zu bzw, ab, dass ein hinsichtlich Strömungseigenschaften und Festigkeit optimierter Kanal 2 erzielt werden kann. Dabei werden die Rundungsradien R an Innen- bzw. Außenseite des Kanalstegs 7 entlang des gekrümmten Kanalabschnitts wie folgt variiert:

Der gekrümmte Bereich des Kanalstegs 7 wird vom Mittelpunkt des inneren Krümmungskreises $M_1$ aus in 5 Bereiche unterteilt (dies ist in beiden Figuren 8 und 9 gezeigt):

Erster Bereich (1) = Gerader Bereich vor der Umlenkung.

Zweiter Bereich (2) = Bereich der einlaufenden Umlenkung, in dem die Gerade durch den Mittelpunkt $M_1$ nur die Innenkrümmung schneidet; die Außenseite des Kanalstegs 7 ist noch nicht gekrümmt.

Dritter Bereich (3) = Bereich zwischen dem zweiten und vierten Bereich; in diesem dritten Bereich geht die Gerade durch die Mittelpunkte der Innen- und Außenkrümmungskreise durch.

Vierter Bereich (4) = Bereich der auslaufenden Umlenkung, in dem die Gerade nur die Innenkrümmung und die ungekrümmte Außenseite schneidet.

Fünfter Bereich (5) = gerader Bereich nach der Umlenkung.

Die Gesamtbreite der ungekrümmten Abschnitte des Kanalstegs 7 in einer mittleren Höhe (ohne Kopf- und ggf. Fußradien) ist gegeben durch $D_A$, die Breite der Auflagefläche (nach Abzug der beiden innen und außen verlaufenden Oberkantenradien in diesem Bereich, auch mittlere Stegbreite genannt) ist $D_I$.
In einer besonders bevorzugten Ausführung werden daher als zweite Kennwerte K2 Oberkantenradien vorgegeben gemäß folgender Beziehung:

$$R = \frac{(D_A - D_I)}{2}$$

Dabei ist die Auflagefläche stets in der Mitte des Kanalstegs 7 vorgesehen und die Radien an der Oberkante sind gleich groß. Sollen die Oberkantenradien unterschiedlich sein, so kann zusätzlich ein positionsabhängiger Parameter b mittels des zweiten Kennwerts K2 berücksichtigt werden gemäß folgenden Beziehungen:

$$R_A = \frac{(D_A - D_I)}{2} + b$$

mit $R_A$ = äußerer Oberkantenradius

$$R_I = \frac{(D_A - D_I)}{2} - b$$

mit $R_I$ = innerer Oberkantenradius.
In dem ersten Bereich (1) und fünften Bereich (5) oder Kanalabschnitt werden die beiden Rundungsradien R senkrecht zum Kanalsteg 7 gemessen. In diesen Bereichen sind die Rundungsradien konstant.
Vom zweiten bis zum vierten Bereich (2) bis (4) oder Kanalabschnitt werden die Gesamtstegbreite $D_A$ und die mittlere Stegbreite $D_I$ entlang der Geraden durch den Mittelpunkt $M_1$ des Innenkreises mit dem Rundungsradius $R_1$ gemessen. Die mittlere Stegbreite $D_M$ wird dabei konstant gehalten, während die Abstände $D_1$ und $D_2$ der Innenseite bzw. Außenseite des Kanalstegs 7 die lokale Gesamtstegbreite $D_A$ gemäß folgender Beziehung:

$$D_A = D_2 - D_1$$

definieren. Aufgrund der Lage des Betrachtungszentrums $M_1$ ist $D_1 = R_1$ und bleibt vom zweiten bis zum vierten Bereich (2) bis (4) konstant.
Im zweiten Bereich (2) und vierten Bereich (4) wird der Abstand $D_2$ in Abhängigkeit vom Winkel $\upsilon$ bestimmt, der sich zwischen der Bezugsgeraden und derjenigen Geraden öffnet, die den nächstgelegenen ungekrümmten Bereich des Kanalstegs 7 senkrecht schneidet und durch den Mittelpunkt M₁ des Innenkreises verläuft. Entlang dieses Winkels υ ist der Abstand D₂ wie folgt definiert:

$$D_2(\upsilon) = \frac{D_2(\upsilon = 0)}{\cos(\upsilon)}$$

Dabei ist D₂(υ=0) wegen der ungekrümmten Bereiche des Kanalstegs 7 als

$$D_2(\upsilon = 0) = D_1 + D_A \, (ungekrümmt)$$

mit der Stegbreite in ungekrümmten Bereichen D_A definiert.

Dementsprechend folgen die Oberkantenradien oder Rundungsradien R bzw. R_A und R_B (siehe Figur 9) der Beziehung:

$$R_{A/B} = \frac{(D_2 - D_1 - D_i)}{2} \pm b = \frac{1}{2}\left[\frac{D_2(\upsilon = 0)}{\cos(\upsilon)} - D_1 - D_i\right] \pm b$$

In dritten Bereich (3) wird der Abstand D₂ in Abhängigkeit vom Winkel φ bestimmt, der sich zwischen der Bezugsgeraden zum Mittelpunkt M1 und der Winkelhalbierenden der Krümmung öffnet. Entlang der Winkelhalbierenden liegt der Mittelpunkt M2 des äußeren Krümmungskreises mit dem Abstand D₃ zum Mittelpunkt M1 des inneren Krümmungskreises und dem Abstand (=Radius) R₂ zur Außenkante.

Der Abstand D₂ wird für den dritten Bereich (3) wie folgt vorgegeben:

$$D_2(\varphi) = D_3 \cdot \cos(\varphi) + \sqrt{R_2{}^2 - (D_3 \cdot \sin(\varphi))^2}$$

Dementsprechend werden die Oberkantenradien für den dritten Bereich (3) wie folgt definiert:

$$R_{A/B} = \frac{(D_2 - D_1 - D_l)}{2} \pm b = \frac{(D_3 \cdot \cos(\varphi) + \sqrt{R_2{}^2 - (D3 \cdot \sin(\varphi))^2} - D_1 - D_l)}{2} \pm b$$

mit

$$D_3 = \sqrt{2} \cdot (D1 + D_A(\upsilon = 0) - R_2)$$

In einer weiteren besonders bevorzugten Ausführung wird der Fußradius des Kanalsteges 7 entsprechend dem Kopfradius des Kanalsteges 7 eingestellt, so dass sich hier ein besonders günstiges Umformverhältnis ergibt. Aufgrund des punktsymmetrischen Aufbaus kann die Bestimmung der lokalen Innen- und Außenradien in vertauschter Weise analog, d.h. der zu einem Kopfaußenradius R₂ gehörige Fußaußenradius entspricht dem zum oben genannten Kopfaußenradius R₂ zugehörigen Kopfinnenradius R₁ (und umgekehrt).

In einer weiteren besonders bevorzugten Ausführung wird die gewünschte lokale Steghöhe im Bereich der Umlenkung durch Anheben des Kanalbodens 6 dahingehend modifiziert, dass der durch die im Umlenkungsbereich auftretenden, größeren Kopf- und/oder Fußradien anwachsende hydraulische Durchmesser des Kanals 2 durch Reduzierung der Kanalhöhe auf den hydraulischen Durchmesser im ungekrümmten Bereich reduziert wird, was zu kontinuierlichen Strömungsverhältnissen im Umlenkungsbereich führt.

**Patentansprüche**

1. Scheibenelement (1) für eine Stromabnehmerplatte oder Bipolarplatte einer Brennstoffzelle (3), mit einer ein- oder beidseitig eingebrachten Kanalstruktur (S) mit mehreren, insbesondere parallel verlaufenden Kanälen (2) mit Strömungsquerschnitten, wobei der jeweilige Kanal (2) eine an den zugehörigen Strömungsquerschnitt angepasste innere Geometrie mit verschiedenen Kennwerten (K1, K2) für verschiedene Kanalabschnitte ((1) bis (5)) aufweist.

2. Scheibenelement nach Anspruch 1, wobei für einen gerade verlaufenden Kanalabschnitt ((1), (5)) ein erster Kennwert (K1) das Verhältnis von Abrundung des Kanalquerschnitts zur Breite des Kanalquerschnitts repräsentiert.

3. Scheibenelement nach Anspruch 2, wobei als Abrundung des Kanalquerschnitts ein Rundungsradius (R1) am Übergang vom Kanalsteg (7) zur Kanalseitenwand (5) und/oder ein Rundungsradius (R2) am Übergang von der Kanalseitenwand (5) zum Kanalboden (6) vorgebbar sind bzw. ist.

4. Scheibenelement nach Anspruch 2 oder 3, wobei als Breite des Kanalquerschnitts eine Stegbreite (SB) und/oder eine Kanalbreite (KB) vorgebbar sind bzw. ist.

5. Scheibenelement nach einem der Ansprüche 2 bis 4, wobei für den erste Kennwert (K1) folgende Beziehung vorgebbar ist:

$$K = \left[ \frac{-[2 \cdot R1 \cdot \alpha \cdot \sin(\alpha)] + R1 \cdot \pi \cdot \sin(\alpha) - 2 \cdot R1 \cdot \sin(\alpha) - 2 \cdot R1 \cdot \cos(\alpha)}{KB \cdot \sin(\alpha) + SB \cdot \sin(\alpha) + 2 \cdot Z \cdot \sin(\alpha)} \right] +$$
$$\left[ \frac{2 \cdot R1 - 2 \cdot R2 \cdot \alpha \cdot \sin(\alpha) + R2 \cdot \pi \cdot \sin(\alpha) - 2 \cdot R2 \cdot \sin(\alpha) - 2 \cdot R2 \cdot \cos(\alpha) + 2 \cdot R2 - 2 \cdot Z \cdot \sin(\alpha) + 2 \cdot Z}{KB \cdot \sin(\alpha) + SB \cdot \sin(\alpha) + 2 \cdot Z \cdot \sin(\alpha).} \right]$$

6. Scheibenelement nach Anspruch 5, wobei der erste Kennwert (K1) höchstens 0,8, bevorzugt 0,3 oder 0,15 beträgt.

7. Scheibenelement nach einem der vorhergehenden Ansprüche 1 bis 6, wobei für einen gekrümmten Kanalabschnitt ((2) bis (4)) ein zweiter Kennwert (K2) eine Innenkrümmung und/oder eine Außenkrümmung des Kanals (2) repräsentiert.

8. Scheibenelement nach Anspruch 7, wobei die Innenkrümmung den Innenradius ($R_1$) des gekrümmten Kanalabschnitts ((2) bis (4)) entlang des Kanalstegs (7) repräsentiert.

9. Scheibenelement nach Anspruch 7 oder 8, wobei die Außenkrümmung den Außenradius ($R_2$) des gekrümmten Kanalabschnitts ((2) bis (4)) entlang des Kanalstegs (7) repräsentiert.

10. Scheibenelement nach einem der vorhergehenden Ansprüche 7 bis 9, wobei die Stegbreite (SB) im gekrümmten Kanalabschnitt konstant ist.

11. Scheibenelement nach einem der vorhergehenden Ansprüche 7 bis 10, wobei die Außenkrümmung und die Innenkrümmung entlang des gekrümmten Kanalabschnitts ((2) bis (4)) im Wesentlichen gleichgroß sind gemäß der Beziehung:

$$R = \frac{(D_A - D_I)}{2}$$

**12.** Scheibenelement nach einem der vorhergehenden Ansprüche 7 bis 10, wobei die Außenkrümmung und die Innenkrümmung entlang des gekrümmten Kanalabschnitts variieren gemäß der Beziehung:

$$R_{A/I} = \frac{(D_A - D_I)}{2} + / - b\ .$$

**13.** Scheibenelement nach einem der vorhergehenden Ansprüche 1 bis 12, mit einer Scheibendicken von 0,05 mm bis 1 mm.

**14.** Scheibenelement nach einem der vorhergehenden Ansprüche 1 bis 13, aus einem metallischen Werkstoff mit einer elektrischen Leitfähigkeit von mindestens 5000 S/cm.

**15.** Scheibenelement nach einem der vorhergehenden Ansprüche 1 bis 14, aus einem metallischen Werkstoff mit einer mechanischen Festigkeit von mindestens 100 MPa.

**16.** Brennstoffzellenstapel (3) mit mindestens einem Scheibenelement (1) nach einem der vorhergehenden Ansprüche 1 bis 15, auf welche ober- und/oder unterseitig abwechselnd Membranen und/oder Elektrolyteinheiten (4) aufstapelbar sind.

**17.** Verfahren zur Herstellung eines Scheibenelements nach einem der vorhergehenden Ansprüche 1 bis 15, wobei Kanalstrukturen (S) ein- oder beidseitig durch Umformen eingebracht werden und der Umformgrad der Kanälen (2) beim Umformen schrittweise reduziert wird, indem der Umformgrad entlang des Kanalsverlauf für verschiedene Kanalabschnitte ((1) bis (5)) mittels eines vorgegebenen Kennwerts (K1, K2) verschieden reduziert wird.

Fig. 1

Fig. 2

Fig. 3

Fig. 4

Fig. 5

Fig. 6

Fig. 7

Fig. 8

Fig. 9

**IN DER BESCHREIBUNG AUFGEFÜHRTE DOKUMENTE**

**In der Beschreibung aufgeführte Patentdokumente**

- DE 19713250 A1